# FASCICULE DE BREVET EUROPEEN

(11) **EP 3 065 955 B1**
(45) Date de publication et mention de la délivrance du brevet: **08.07.2020**
(21) Numéro de dépôt: 14802331.0
(22) Date de dépôt: 05.11.2014
(51) Int. Cl.: B60C 11/04, B60C 11/12

(54) **BANDE DE ROULEMENT COMPORTANT UN BLOC PRESENTANT UNE PLURALITE D'INCISIONS**
REIFENLAUFSTREIFEN MIT EINEM MIT MEHREREN EINSCHNITTEN VERSEHENEN BLOCK
TREAD COMPRISING A BLOCK WITH A PLURALITIY OF SIPES

(30) Priorité: 05.11.2013 FR 1360822
(43) Date de publication de la demande: 14.09.2016
(73) Titulaire: Compagnie Générale des Etablissements Michelin, 63000 Clermont-Ferrand (FR)
(72) Inventeur: BONNAMOUR, Matthieu, 63040 Clermont-Ferrand Cedex 9 (FR); DURAND-GASSELIN, Benoit, 63040 Clermont-Ferrand Cedex 9 (FR); LEFEBVRE, Serge, 63040 Clermont-Ferrand Cedex 9 (FR); VANDAELE, Mathieu, 63040 Clermont-Ferrand Cedex 9 (FR); YOKOKAWA, Kazutaka, 63040 Clermont-Ferrand Cedex 9 (FR)
(74) Mandataire: Demaure, Pierre-Yves
(86) Numéro de dépôt international: PCT/EP2014/073789
(87) Numéro de publication internationale: WO 2015/067642

(56) Documents cités:
- EP-A2- 0 369 932
- WO-A1-2007/099084
- DE-A1- 4 018 463
- JP-A- H05 286 311
- JP-A- 2001 219 718
- US-A- 2 821 231
- US-A1- 2013 061 992

## Description

### DOMAINE DE L'INVENTION

La présente invention concerne une bande de roulement d'un pneumatique pour véhicule automobile comportant un bloc en matériau caoutchoutique dont la longueur est très supérieure à la largeur, plus particulièrement, l'invention concerne une bande de roulement comportant un bloc présentant une pluralité d'incisions.

### ETAT DE LA TECHNIQUE

Le document FR759592 divulgue l'utilisation d'incisions dans une bande de roulement d'un pneumatique en vue d'augmenter l'adhérence de ce pneumatique. En effet, l'utilisation d'incisions permet d'augmenter le nombre d'arêtes sur la surface de roulement de la bande de roulement ce qui favorise, notamment, l'adhérence sur un sol mouillé. Par incisions, on entend une découpure dans la bande de roulement délimitant des parois de matière, la largeur de cette découpure est appropriée pour permettre la mise en contact au moins partielle de ces parois de matière lors du passage dans l'aire de contact du pneumatique avec le sol. La largeur d'une incision est au plus égale à 2 millimètres (mm).

Le document FR43383 additionnel au document FR759592 divulgue l'utilisation d'incisions obliques. Les incisions obliques délimitent des sous-blocs en matériau caoutchoutique. En fonction de la largeur de ces sous-blocs, c'est-à-dire en fonction de la distance entre deux incisions obliques adjacentes, la résistance à l'usure de ces sous-blocs est plus ou moins importante. En outre, l'utilisation d'incisions obliques dans la bande de roulement peut entraîner la génération de bruits supplémentaires lors des roulages. Les documents US2013061992, WO2007099084, EP0369932 et JPH05286311 divulguent également une bande de roulement comportant des blocs et des sous-blocs délimités par des incisions.

Il existe donc un besoin de proposer une bande de roulement présentant, sur tout ou partie de cette bande de roulement, une pluralité d'incisions obliques dont les règles de répartition optimisent la résistance à l'usure de cette bande de roulement tout en limitant les risques de génération de bruit au roulage.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « bloc » sur une bande de roulement, on entend un élément en relief délimité par des rainures et comprenant des parois latérales et une face de contact, cette dernière étant destinée à venir en contact avec le sol au cours d'un roulage.

Par « rainure », on entend une découpure dans la bande de roulement délimitant des parois de matière, la largeur de cette découpure est telle que les parois associées à cette découpure ne peuvent pas venir en contact l'une contre l'autre dans des conditions usuelles de roulage. La largeur pour une rainure est supérieure à 2 millimètres.

Par « incision », on entend une découpure dans la bande de roulement délimitant des parois de matière, la largeur de cette découpure est appropriée pour permettre la mise en contact, au moins partielle, des parois de l'incision lors du passage dans l'aire de contact entre le pneumatique et le sol. La largeur pour une incision est inférieure ou égale à 2 millimètres.

Par « direction axiale », on entend une direction parallèle à l'axe de rotation du pneu.

Par « direction circonférentielle », on entend une direction qui est tangente à tout cercle centré sur l'axe de rotation. Cette direction est perpendiculaire à la direction axiale.

Par « direction oblique », on entend une direction qui possède une composante axiale et une composante circonférentielle non nulles.

### RESUME DE L'INVENTION

L'invention concerne une bande de roulement pour pneumatique comportant au moins un bloc en matériau caoutchoutique de largeur W et de longueur L avec L»W. Ce bloc s'étend selon une direction circonférentielle (X) lorsque la bande de roulement est montée sur le pneumatique. Le bloc comporte une surface de contact destinée à venir en contact avec un sol et une première paroi latérale et une seconde paroi latérale délimitant cette surface de contact. Le bloc comporte en outre une pluralité d'incisions débouchant sur la surface de contact du bloc, chaque incision s'étendant sur la surface de contact selon une direction oblique en débouchant sur la première paroi latérale et sur la seconde paroi latérale, les incisions du bloc étant orientées dans le même sens. Les incisions sont réparties sur la surface de contact du bloc de sorte que lorsqu'une incision atteint la seconde paroi latérale, une autre incision débute à partir de la première paroi latérale, à un même niveau circonférentiel sur le bloc. Chaque incision comporte uniquement une première partie d'incision et une seconde partie d'incision, la première partie d'incision ayant selon une direction transversale une longueur L1 en faisant un angle α avec cette direction transversale et la seconde partie d'incision ayant une longueur L2 en faisant un angle β, avec L1>L2 et β > α.

L'invention propose ainsi de maintenir une certaine distance entre deux incisions adjacentes, de sorte à ce que la largeur d'un sous-bloc délimité par ces deux incisions soit suffisamment importante pour lui conférer une bonne rigidité. On limite ainsi les risques d'arrachement des sous-blocs au cours des roulages.

L'invention propose, en outre, d'organiser les incisions de sorte à ce que lorsqu'on projette les incisions selon la direction circonférentielle, le chevauchement de ces incisions est limité. Chaque incision oblique participe aux performances d'adhérence du pneumatique notamment lors de freinages en virage sur un sol mouillé. Si des incisions obliques se chevauchent selon la direction circonférentielle, l'effort de freinage serait repris par ces deux incisions dans leur zone de chevauchement. L'usure des sous-blocs associés à ces deux incisions est alors modifiée dans cette zone de chevauchement puisque l'effort de freinage est réparti entre ces deux sous-blocs. En revanche, dans les zones où il n'y a pas de chevauchement, une seule incision oblique reprend l'ensemble de ces efforts. L'usure des sous-blocs est alors variable selon que les incisions obliques associées sont en chevauchement ou pas avec d'autres incisions obliques. En prévoyant de limiter le chevauchement des incisions obliques, on s'assure que l'usure des sous-blocs dans le bloc est globalement uniforme. La pérennité du pneumatique est alors améliorée.

De plus, les inventeurs ont découvert qu'en proposant une succession ininterrompues d'incisions dans la longueur du bloc, on limite globalement le bruit généré par la bande de roulement sur un sol.

Enfin, en proposant des incisions complexes comportant des parties présentant des longueurs et des angles différents, on donne aux sous-blocs du bloc une certaine polyvalence dans la gestion de l'adhérence sur sol mouillé tant en virage qu'en ligne droite.

Dans une variante de réalisation, l'angle α est supérieur à 0° et inférieur à 40°.

On s'assure ainsi que les sous-blocs présentent de bonnes performances de freinage en ligne droite sur route mouillée.

Dans une autre variante de réalisation, l'angle β est supérieur ou égal à 65° et inférieur ou égal à 90°.

On s'assure ainsi que les sous-blocs présentent de bonnes performances d'adhérence en virage sur route mouillée.

Dans une autre variante de réalisation de l'invention, la première partie d'incision ayant une largeur W1 et la seconde partie d'incision ayant une largeur W2, la largeur W2 de la seconde partie d'incision est déterminée en fonction de la largeur W1, de l'angle α, de l'angle β, de sorte que l'aire A1 formée par le croisement entre cette seconde partie et un plan P s'étendant selon la direction transversale et perpendiculaire à la bande de roulement est globalement identique à l'aire A2 formée par ce plan P au niveau de la première partie d'incision.

De cette manière on s'assure que les variations de volume de creux, dans la longueur du bloc, sont limitées. On améliore ainsi les performances du pneumatique au niveau du bruit.

Dans une autre variante de réalisation, tout ou partie des dimensions des incisions varient dans la longueur L du bloc.

Les incisions font parties d'un ensemble de motifs qui constitue la sculpture de la bande de roulement. Il est connu de prévoir des motifs de différentes tailles en vue de brouiller le signal sonore émis par la sculpture du pneumatique et de diminuer en conséquence les émergences remarquables du spectre du bruit de sculpture. En faisant varier des dimensions des incisions, il est possible d'adapter les caractéristiques de ces incisions à la taille des motifs dans lesquels elles s'inscrivent.

Dans un mode de réalisation préférentiel, l'angle β de la seconde partie d'incision varie dans la longueur L du bloc.

On favorise le freinage en ligne droite sur sol mouillé.

Dans un autre mode de réalisation préférentiel, la longueur L2 de la seconde partie d'incision varie dans la longueur L du bloc.

On favorise l'adhérence en virage sur sol mouillé.

Dans un autre mode de réalisation de l'invention, les incisions présentent entre chaque partie d'incision un rayon de raccordement compris entre 0,4 mm et 5 mm.

De cette manière, on limite la génération de fissures au niveau des zones de raccordements entre les parties d'incisions.

Dans un autre mode de réalisation de l'invention, les incisions sont partiellement ou totalement chanfreinées au niveau de la surface de contact du bloc.

On améliore ainsi les performances du pneumatique en freinage et en virage sur un sol sec.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement une vue partielle d'une bande de roulement, selon un premier mode de réalisation de l'invention ;
- la **figure 2** représente schématiquement une vue agrandie d'une incision du bloc de la **figure 1** ;
- la **figure 3** représente une vue en coupe A-A' d'une partie de l'incision de la **figure 1** ;
- la **figure 4** représente une vue en coupe B-B' d'une partie de l'incision de la **figure 1** ;

Dans la description qui va suivre, des éléments sensiblement identiques ou similaires seront désignés par des références identiques.

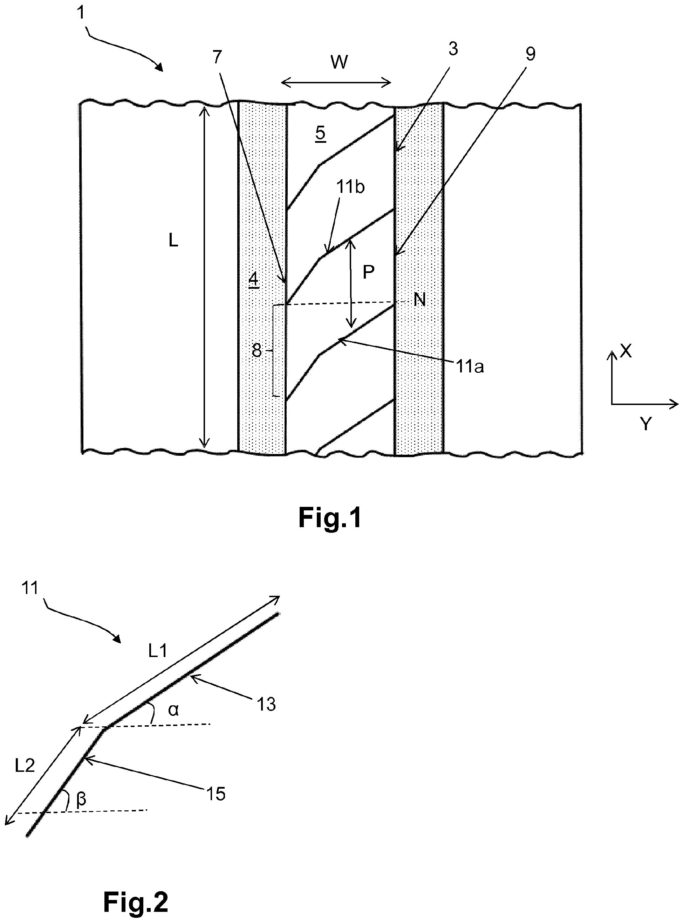

La **figure 1** représente une vue partielle d'une bande de roulement 1 d'un pneumatique selon un premier mode de réalisation de l'invention.

La bande de roulement 1 comporte au moins un bloc 3 en matériau caoutchoutique. Le bloc 3 est ici délimité par deux rainures 4 qui ont été ici grisées sur la **figure 1** pour favoriser la compréhension de l'invention. Plus particulièrement, le bloc 3 présente une largeur W et une longueur L, cette longueur L étant très supérieure à la largeur W. Par très supérieure, on entend que la longueur L est au moins égale à 5 fois la largeur W. De cette manière, lorsque la bande de roulement 1 est montée sur un pneumatique, le bloc 3 a l'allure d'une bande s'étendant selon une direction circonférentielle X. Cette bande peut s'étendre sur toute la circonférence du pneumatique. En variante, cette bande s'étend sur une partie seulement de cette circonférence.

De plus, le bloc 3 comporte une surface de contact 5 destinée à venir en contact avec un sol et une première paroi latérale 7 et une seconde paroi latérale 9 délimitant cette surface de contact 5. En outre, le bloc 3 comporte une pluralité d'incisions 11, 11a, 11b débouchant sur la surface de contact 5. Chaque incision s'étend selon une direction oblique en débouchant sur la première paroi latérale 7 et sur la seconde paroi latérale 9. Les incisions du bloc sont ici orientées dans le même sens, c'est-à-dire que les incisions s'étendent de la première paroi latérale 7 vers la seconde paroi latérale 9 selon un sens positif en X et en Y. Ces incisions sont réparties sur la surface de contact 5 du bloc 3 de sorte que lorsqu'une incision 11a atteint la seconde paroi latérale 9, une autre incision 11b débute à partir de la première paroi latérale 7, au même niveau N sur le bloc 3. Par « au même niveau N » sur le bloc, on entend une position circonférentielle déterminée sur ce bloc. En outre par « au même niveau », on entend qu'il peut exister un faible décalage entre la position circonférentielle des incisions 11a, 11b. Ce décalage est cependant limité. Il est inférieur à 5 % du pas P du sous-bloc 8 délimité par les deux incisions 11a et 11b. Pour évaluer la présence ou non d'un tel décalage, on utilisera la notion de fibre neutre associée à chaque incision. De plus, chaque incision 11 comporte au moins une première partie d'incision 13 et une seconde partie d'incision 15, la première partie d'incision 13 ayant selon une direction transversale une longueur L1 en faisant un angle α avec cette direction transversale et la seconde partie d'incision 15 ayant une longueur L2 en faisant un angle β, avec L1>L2 et β>α.

Comme cela est visible à la **figure 2****,** l'angle α est supérieur à 0° et inférieur à 40°. De la même manière, l'angle β est supérieur ou égal à 65° et inférieur ou égal à 90°.

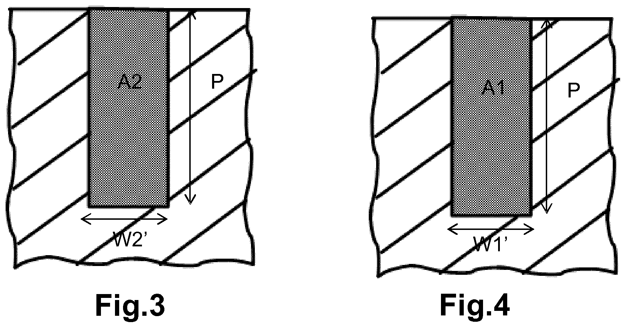

Dans un mode de réalisation préférentiel visible aux **figures 3** à **4****,** la première partie d'incision 13 a une largeur W1 et la seconde partie d'incision 15 a une largeur W2. La largeur W2 de la seconde partie d'incision est déterminée en fonction de la largeur W1, de l'angle α, de l'angle β, de sorte que l'aire A2 formée par le croisement entre cette seconde partie 15 et un plan P s'étendant selon la direction transversale Y et perpendiculaire à la bande de roulement 1 est identique à l'aire A1 formée par ce plan P au niveau de la première partie d'incision 13.

Plus particulièrement, l'aire A2 correspond au produit de la largeur W2'avec la profondeur P de l'incision, comme cela est visible à la **figure 3****,** et W2'= W2/(sin(β)). De la même manière, l'aire A1 correspond au produit de la largeur W1' avec la profondeur P de l'incision, comme cela est visible à la **figure 4****,** et W1' = W1/sin(α). De l'identité entre l'aire A1 et l'aire A2, on en déduit que W2=W1^{∗}sin(β)/ sin(a). Etant donné que β est supérieur à α, on en déduit également que W2 est supérieur à W1.

Dans une variante de réalisation, l'aire A1 est globalement égale à l'aire A2, c'est-à-dire que l'aire A1 équivaut à +/- 10% de l'aire A2.

Dans des variantes de réalisation tout ou partie des incisions 11 varient dans la longueur L du bloc 3. Ainsi, dans une variante de réalisation c'est l'angle β de la seconde partie d'incision 15 qui varie dans la longueur L du bloc 3. Dans une autre variante de réalisation, c'est la longueur L2 de la seconde partie d'incision 15 qui varie dans la longueur L du bloc 3.

Dans une variante de réalisation, les incisions 11 présentent entre chaque partie d'incision 13, 15 un rayon de raccordement R compris entre 0,4 mm et 5 mm.

Dans une autre variante de réalisation, les incisions 11 sont partiellement ou totalement chanfreinées au niveau de la surface de contact 5 du bloc 3.

L'invention n'est pas limitée aux exemples décrits et représentés et diverses modifications peuvent y être apportées sans sortir de son cadre.

Dans une autre variante de réalisation visible à la **figure 10**, les incisions 11 sont partiellement ou totalement chanfreinées au niveau de la surface de contact 5 du bloc 3.

L'invention n'est pas limitée aux exemples décrits et représentés et diverses modifications peuvent y être apportées sans sortir de son cadre tel que défini par les revendications ci-jointes.

## Revendications

1. Bande de roulement pour pneumatique comportant au moins un bloc (3) en matériau caoutchoutique de largeur W et de longueur L avec L»W, ce bloc s'étendant selon une direction circonférentielle (X) lorsque la bande de roulement (1) est montée sur le pneumatique, le bloc (3) comportant une surface de contact (5) destinée à venir en contact avec un sol et une première paroi latérale (7) et une seconde paroi latérale (9) délimitant cette surface de contact (5), le bloc (3) comportant une pluralité d'incisions (11, 11a, 11b) débouchant sur la surface de contact (5) du bloc, chaque incision (11) s'étendant sur la surface de contact (5) selon une direction oblique en débouchant sur la première paroi latérale (7) et sur la seconde paroi latérale (9), les incisions du bloc étant orientées dans le même sens, les incisions (11) étant réparties sur la surface de contact (5) du bloc de sorte que lorsqu'une incision (11a) atteint la seconde paroi latérale (9), une autre incision (11b) circonférentiellement adjacente à ladite incision (11a) débute à partir de la première paroi latérale (7), à un même niveau (N) circonférentiel sur le bloc (3) avec un décalage inférieur à 5% d'un pas P d'un sous-bloc 8 délimité par lesdites deux incisions (11a, 11b), chaque incision (11) comportant uniquement une première partie d'incision (13) et une seconde partie d'incision (15), **caractérisé en ce que** la première partie d'incision (13) a selon une direction transversale une longueur L1 en faisant un angle α avec cette direction transversale et la seconde partie d'incision (15) a une longueur L2 en faisant un angle β, avec L1>L2 et β>α.

2. Bande de roulement selon la revendication 1, **caractérisée en ce que** l'angle α est supérieur à 0° et inférieur à 40°.

3. Bande de roulement selon l'une des revendications 1 à 2, **caractérisée en ce que** l'angle β est supérieur ou égal à 65° et inférieur ou égal à 90°.

4. Bande de roulement selon l'une quelconque des revendications 1 à 3, la première partie d'incision (13) ayant une largeur W1 et la seconde partie d'incision (15) ayant une largeur W2, **caractérisée en ce que** la largeur W2 de la seconde partie d'incision (15) est déterminée en fonction de la largeur W1, de l'angle α, de l'angle β, de sorte que l'aire A2 formée par le croisement entre cette seconde partie (15) et un plan P s'étendant selon la direction transversale (Y) et perpendiculaire à la bande de roulement (1) est globalement identique à l'aire A1 formée par ce plan P au niveau de la première partie d'incision (13).

5. Bande de roulement selon l'une des revendications 1 à 4, **caractérisée en ce que** tout ou partie des dimensions des incisions (11) varient dans la longueur L du bloc (3).

6. Bande de roulement selon la revendication 5, **caractérisée en ce que** l'angle β de la seconde partie d'incision (15) varie dans la longueur L du bloc.

7. Bande de roulement selon la revendication 5, **caractérisée en ce que** la longueur L2 de la seconde partie d'incision (15) varie dans la longueur L du bloc.

8. Bande de roulement selon l'une des revendications 1 à 7, **caractérisée en ce que** les incisions (11) présentent entre chaque partie d'incision (13, 15, 17) un rayon de raccordement R compris entre 0,4 mm et 5 mm.

9. Bande de roulement selon l'une des revendications 1 à 8, **caractérisée en ce que** les incisions (11) sont partiellement ou totalement chanfreinées sur la surface de contact (5) du bloc.

## Patentansprüche

1. Laufstreifen für einen Reifen, der mindestens einen Block (3) aus einem Gummimaterial mit einer Breite W und einer Länge L umfasst, wobei L >> W, wobei sich dieser Block in einer Umfangsrichtung (X) erstreckt, wenn der Laufstreifen (1) auf dem Reifen montiert ist, wobei der Block (3) eine Kontaktfläche (5), die dazu bestimmt ist, mit einem Boden in Kontakt zu kommen, und eine erste Seitenwand (7) und eine zweite Seitenwand (9), die diese Kontaktfläche (5) begrenzen, umfasst, wobei der Block (3) eine Vielzahl von Einschnitten (11, 11a, 11b) umfasst, die an der Kontaktfläche (5) des Blocks münden, wobei sich jeder Einschnitt (11) in einer schrägen Richtung über die Kontaktfläche (5) erstreckt und an der ersten Seitenwand (7) und an der zweiten Seitenwand (9) mündet, wobei die Einschnitte des Blocks in derselben Richtung ausgerichtet sind, wobei die Einschnitte (11) so über die Kontaktfläche (5) des Blocks verteilt sind, dass, wenn ein Einschnitt (11a) die zweite Seitenwand (9) erreicht, ein anderer Einschnitt (11b), der auf den Umfang bezogen zu dem Einschnitt (11a) benachbart ist, auf einer gleichen Umfangshöhe (N) des Blocks (3) an der ersten Seitenwand (7) seinen Anfang hat, mit einem Versatz kleiner als 5 % einer Strecke P eines Teilblocks 8, der durch die zwei Einschnitte (11a, 11b) begrenzt wird, wobei jeder Einschnitt (11) ausschließlich einen ersten Einschnittsteil (13) und einen zweiten Einschnittsteil (15) umfasst, **dadurch gekennzeichnet, dass** der erste Einschnittsteil (13) in einer Querrichtung eine Länge L1 aufweist und mit dieser Querrichtung einen Winkel α bildet und der zweite Einschnittsteil (15) eine Länge L2 aufweist und einen Winkel β bildet, mit L1 > L2 und β > α.

2. Laufstreifen nach Anspruch 1, **dadurch gekennzeichnet, dass** der Winkel α größer als 0° und kleiner als 40° ist.

3. Laufstreifen nach einem der Ansprüche 1 bis 2, **dadurch gekennzeichnet, dass** der Winkel β größer als oder gleich 65° und kleiner als oder gleich 90° ist.

4. Laufstreifen nach einem der Ansprüche 1 bis 3, wobei der erste Einschnittsteil (13) eine Breite W1 aufweist und der zweite Einschnittsteil (15) eine Breite W2 aufweist, **dadurch gekennzeichnet, dass** die Breite W2 des zweiten Einschnittsteils (15) in Abhängigkeit von der Breite W1, dem Winkel α, dem Winkel β so bestimmt wird, dass die Fläche A2, die durch das Kreuzen dieses zweiten Teils (15) mit einer Ebene P, die sich in der Querrichtung (Y) erstreckt und zu dem Laufstreifen (1) senkrecht ist, gebildet wird, mit der Fläche A1, die durch diese Ebene P im Bereich des ersten Einschnittsteils (13) gebildet wird, im Wesentlichen identisch ist.

5. Laufstreifen nach einem der Ansprüche 1 bis 4, **dadurch gekennzeichnet, dass** alle oder ein Teil der Maße der Einschnitte (11) über die Länge L des Blocks (3) variieren.

6. Laufstreifen nach Anspruch 5, **dadurch gekennzeichnet, dass** der Winkel β des zweiten Einschnittsteils (15) über die Länge L des Blocks variiert.

7. Laufstreifen nach Anspruch 5, **dadurch gekennzeichnet, dass** die Länge L2 des zweiten Einschnittsteils (15) über die Länge L des Blocks variiert.

8. Laufstreifen nach einem der Ansprüche 1 bis 7, **dadurch gekennzeichnet, dass** die Einschnitte (11) zwischen jedem Einschnittsteil (13, 15, 17) einen Übergangsradius R zwischen 0,4 mm und 5 mm aufweisen.

9. Laufstreifen nach einem der Ansprüche 1 bis 8, **dadurch gekennzeichnet, dass** die Einschnitte (11) an der Kontaktfläche (5) des Blocks teilweise oder vollständig abgeschrägt sind.

## Claims

1. Tread for a tyre comprising at least one block (3) of rubbery material of width W and length L with L>>W, this block extending in a circumferential direction (X) when the tread (1) is mounted on the tyre, the block (3) comprising a contact surface (5) intended to come into contact with the ground and a first lateral wall (7) and a second lateral wall (9) delimiting this contact surface (5), the block (3) comprising a plurality of sipes (11) opening onto the contact surface (5) of the block, each sipe (11) extending over the contact surface (5) in an oblique direction opening onto the first lateral wall (7) and onto the second lateral wall (9), the sipes of the block being oriented in the same direction, the sipes (11) being distributed over the contact surface (5) of the block in such a way that when one sipe (11a) reaches the second lateral wall (9), another sipe (11b) circumferentially adjacent to said one sipe (11a) starts out from the first lateral wall (7) at a same circumferential level (N) on the block (3) with an offset which is less than 5 % of the pitch P of the sub-block (8) delimited by said two sipes (11a, 11b), each sipe (11) only comprising a first sipe part (13) and a second sipe part (15), **characterized in that** the first sipe part (13) has, in a transverse direction, a length L1 making an angle α with this transverse direction and the second sipe part (15) has a length L2 making an angle β, with L1>L2 and β > α.

2. Tread according to Claim 1, **characterized in that** the angle α is greater than 0° and less than 40°.

3. Tread according to either of Claims 1 and 2, **characterized in that** the angle β is greater than or equal to 65° and less than or equal to 90°.

4. Tread according to any one of Claims 1 to 3, with the first sipe part (13) having a width W1 and the second sipe part (15) having a width W2, **characterized in that** the width W2 of the second sipe part (15) is determined as a function of the width W1, of the angle α, of the angle β, so that the area A2 formed by the intersection between this second part (15) and a plane P extending in the transverse direction (Y) and perpendicular to the tread (1) is identical overall to the area A1 formed by this plane P at the first sipe part (13).

5. Tread according to one of Claims 1 to 4, **characterized in that** all or some of the dimensions of the sipes (11) vary along the length L of the block (3).

6. Tread according to Claim 5, **characterized in that** the angle β of the second sipe part (15) varies along the length L of the block.

7. Tread according to Claim 6, **characterized in that** the length L2 of the second sipe part (15) varies along the length L of the block.

8. Tread according to one of Claims 1 to 7, **characterized in that** the sipes (11) have, between each sipe part (13, 15, 17), a fillet radius R of between 0.4 mm and 5 mm.

9. Tread according to one of Claims 1 to 8, **characterized in that** the sipes (11) are partially or fully chamfered on the contact surface (5) of the block.
